# EUROPEAN PATENT SPECIFICATION

(11) **EP 2 763 403 B1**
(45) Date of publication and mention of the grant of the patent: **15.08.2018**
(21) Application number: 11873147.0
(22) Date of filing: 29.09.2011
(51) Int. Cl.: H04N 7/18, B60R 1/00, H04N 5/225

(54) **IMAGE DISPLAY DEVICE, AND IMAGE DISPLAY METHOD**
BILDANZEIGEVORRICHTUNG UND BILDANZEIGEVERFAHREN
DISPOSITIF D'AFFICHAGE D'IMAGE ET PROCÉDÉ D'AFFICHAGE D'IMAGE

(43) Date of publication of application: 06.08.2014
(73) Proprietor: TOYOTA JIDOSHA KABUSHIKI KAISHA, Toyota-shi, Aichi-ken 471-8571 (JP)
(72) Inventor: SOBUE Yuka, Toyota-shi, Aichi-ken, 471-8571 (JP); OKAMURA Ryuji, Toyota-shi, Aichi-ken, 471-8571 (JP); YOSHIOKA Chika, Toyota-shi, Aichi-ken, 471-8571 (JP); HIEI Yu, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2011/072469
(87) International publication number: WO 2013/046409

(56) References cited:
- WO-A1-2011/016367
- JP-A- 2010 093 610
- JP-A- 2010 109 483
- US-A1- 2008 246 843

## Description

An embodiment of the present invention relates to an image display device to display an image around a vehicle.

### Background Art

During low-speed traveling, a driver may not see the place that he or she wants to see due to blind spots caused by the host vehicle and blind spots caused by obstructions, such as walls or other adjacent vehicles. Therefore, a device has been proposed which captures the blind spots caused by the host vehicle or the blind spots caused by obstructions using a camera and displays the captured image using a display. For example, in a device disclosed in Patent Literature 1, for an image captured by a wide-angle camera having a viewing angle of 180°, the range of 120° of the viewing angle of 180° is displayed on a display as a parking assistance image under normal conditions. When an obstruction is detected, this device displays a range of wide angle of 180° on the display as a parking assistance image.

US 2008/0246843 A1 discloses an image display device according to the preamble of claim 1, having a periphery monitoring system for a vehicle capturing an image of a mobile object in a first field of view. The system captures an image of the mobile object in a second field of view that is located on a downstream side of the first field of view in an approaching direction of the vehicle. The first display region of the system displays the captured image along a first trajectory. When the mobile object enters into the second field of view after crossing the first field of view, the image of the mobile object is displayed along a second trajectory in the second display region of the system successively from the first display region. The system causes an auxiliary image to be displayed in the second display region in accordance with the entering of the mobile object into the second field of view.

JP 2010 109483 A discloses a method of dividing a peripheral image of a vehicle into a center, a left, and a right image, wherein the left and right images have distortions, of correcting the distortions, so that the left and right images are non-distorted images, and of displaying the center image and the corrected left and right images on a display device.

JP 2010 093610 A discloses a device for recognizing an object in front of a vehicle, wherein an image is divided into a first region corresponding to a vehicle width and the course of the vehicle, in which an object is recognized by pattern matching, and second regions on the right and left of the first region in accordance with the course of the vehicle and the relative speed of the object, in which the object is detected by an optical flow.

### Citation List

### Patent Literature

[Patent Literature 1] Japanese Unexamined Patent Application Publication No. 2009-65483

### Summary of Invention

### Technical Problem

Meanwhile, as a method of detecting an object near the vehicle, a radar, a lidar, a sonar, and image recognition are known. When a system is considered which notifies a driver of the presence of an obstruction using an image captured by a camera, there is no need to install other devices, such as a sensor, in the case of image recognition.

As a method of detecting an object through the image recognition, a pattern matching method for detecting an object reflected in an image by checking the matching between the image and a predetermined pattern and an optical flow method for detecting an object reflected in an image by analyzing the direction and speed of the point in the image moving with the passage of time may be considered. However, it is difficult to detect an object at a distance of several tens of meters by pattern matching. In addition, a stationary object cannot be detected by the optical flow. Therefore, conventional devices need to be improved in terms of detecting and displaying an object appropriately according to the position, speed, and type of the object.

An embodiment of the present invention has been made in consideration of such a situation, and an object of the present invention is to provide an image display device capable of detecting and displaying an object more appropriately according to the position, speed, and type of the object.

### Solution to Problem

An aspect of the present invention is an image display device including an image acquisition unit that acquires a peripheral image of a vehicle and an image display unit that displays the peripheral image acquired by the image acquisition unit. The image display unit displays the peripheral image on a left side screen, a middle screen, and a right side screen by dividing the peripheral image, detects an object reflected in the peripheral image by checking the matching between the peripheral image and a predetermined pattern for the peripheral image of the middle screen, detects an object reflected in the peripheral image by analyzing the direction and speed of a point in the peripheral image moving with the passage of time for the peripheral image of each of the left and right side screens, and displays a driving assistance display showing the presence of the detected object.

According to this configuration, in the driving assistance display device including the image acquisition unit that acquires a peripheral image of the vehicle and an image display unit that displays the peripheral image acquired by the image acquisition unit, the image display unit displays the peripheral image on the left side screen, the middle screen, and the right side screen by dividing the peripheral image, detects the object reflected in the peripheral image by checking the matching between the peripheral image and the predetermined pattern for the peripheral image of the middle screen, detects the object reflected in the peripheral image by analyzing the direction and speed of the point in the peripheral image moving with the passage of time for the peripheral image of each of the left and right side screens, and displays the driving assistance display showing the presence of the detected object. Therefore, a stationary person near the front of the vehicle, a person which is present near the front of the vehicle when the vehicle is moving, and the like can be detected using the pattern matching method to check the matching between the peripheral image and a predetermined pattern, and the driver can be notified of the presence of the detected person and the like. In addition, a person, a vehicle, and the like approaching from the distant place on the lateral side of the vehicle can be detected using the optical flow method to analyze the direction and speed of the point in the peripheral image moving with the passage of time, and the driver can be notified of the presence of the detected person, vehicle, and the like. Therefore, it is possible to detect and display an object more appropriately according to the position, speed, and type of the object.

In this case, the image display unit displays a frame surrounding the object as the driving assistance display when the object reflected in the peripheral image of the middle screen is detected, and displays a frame, which surrounds at least a part of either the left side screen or the right side screen where the object has been detected, as the driving assistance display when the object reflected in the peripheral image of either the left side screen or the right side screen is detected.

According to this configuration, the image display unit displays a frame surrounding the object as the driving assistance display when the object reflected in the peripheral image of the middle screen is detected, and displays a frame, which surrounds at least a part of either the left side screen or the right side screen where the object has been detected, as the driving assistance display when the object reflected in the peripheral image of either the left side screen or the right side screen is detected. Therefore, the driver can recognize that the object detection methods in the middle screen and the left and right side screens are different.

### Advantageous Effects of Invention

According to an embodiment of the present invention, it is possible to detect and display an object more appropriately according to the speed and the type.

### Brief Description of Drawings

[Fig. 1] Fig. 1 is a block diagram showing the configuration of a driving assistance display device of an embodiment.
[Fig. 2] Fig. 2 is a plan view showing a situation where the driving assistance display device of the embodiment is applied.
[Fig. 3] Fig. 3 is a flow chart showing the basic operation of the driving assistance display device of the embodiment.
[Fig. 4] Fig. 4 is a diagram showing an unprocessed original image captured by a wide-angle rear camera.
[Fig. 5] Fig. 5 is a diagram showing a display image when there is no approaching moving object while the driving assistance display system of the embodiment is operating.
[Fig. 6] Fig. 6 is a diagram showing a display image when an approaching moving object is present while the driving assistance display system of the embodiment is operating.
[Fig. 7] Fig. 7 is a diagram showing a display image when there is no approaching moving object while the driving assistance display system of the embodiment is not operating.
[Fig. 8] Fig. 8 is a diagram showing a display image when an approaching moving object is present while the driving assistance display system of the embodiment is not operating.
[Fig. 9] Fig. 9 is a plan view showing a situation when an object is present in the area of the optical flow of the driving assistance display device of the embodiment.
[Fig. 10] Fig. 10 is a plan view showing the target of driving assistance when an object is present in the area of the optical flow of the driving assistance display device of the embodiment.
[Fig. 11] Fig. 11 is a plan view showing a situation when an object is present in the area of pattern matching of the driving assistance display device of the embodiment.
[Fig. 12] Fig. 12 is a plan view showing the target of driving assistance when an object is present in the area of pattern matching of the driving assistance display device of the embodiment.
[Fig. 13] Fig. 13 is a flow chart showing the operation corresponding to each assistance area and each target of the driving assistance display device of the embodiment.
[Fig. 14] Fig. 14 is a diagram showing a display image when a moving object is present in the area of the optical flow of the driving assistance display device of the embodiment and a person is present in the area of pattern matching.
[Fig. 15] Fig. 15 is a diagram showing a display image when a person is present in the area of pattern matching of the driving assistance display device of the embodiment.
[Fig. 16] Fig. 16 is a diagram showing a display image of another embodiment.
[Fig. 17] Fig. 17 is a diagram showing a display image of still another embodiment.

### Description of Embodiments

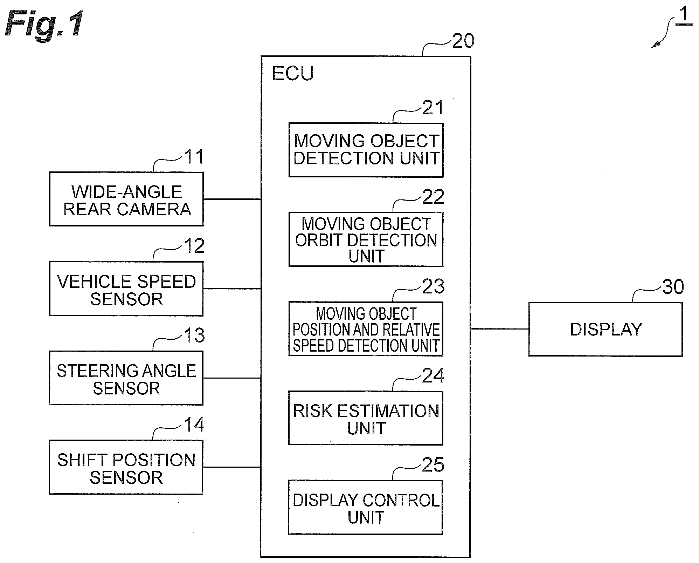

Hereinafter, an image display device according to an embodiment of the present invention will be described with reference to the drawings. As shown in Fig. 1, the image display device of the present embodiment is configured as a driving assistance display device 1. The driving assistance display device 1 includes a wide-angle rear camera 11, a vehicle speed sensor 12, a steering angle sensor 13, an ECU 20, and a display 30. The driving assistance display device 1 of the present embodiment is installed in a vehicle to provide a driver with an image behind the vehicle.

The wide-angle rear camera 11 is a camera for capturing an image behind the vehicle. The wide-angle rear camera 11 is a wide-angle camera having a viewing angle of about 180□. The vehicle speed sensor 12 is a sensor that detects the speed of the vehicle. For example, the vehicle speed sensor 12 detects the vehicle speed of the vehicle by detecting the rotation speed of the axle of the vehicle. The steering angle sensor 13 is a sensor that detects the steering angle of the vehicle. A shift position sensor is a sensor that detects whether or not the shift position of the transmission of the vehicle is a position of Reverse (R).

The ECU (Electronic Control Unit) 20 performs overall control of the driving assistance display 1. The ECU 20 is an electronic control unit configured to include a CPU (Central Processing Unit), a ROM (Read Only Memory), a RAM (Random Access Memory), and the like. In the ECU 2, an application program stored in the ROM is downloaded to the RAM, and the CPU executes the application program to perform various operations related to image display.

The ECU 20, when classified according to its function, has a moving object detection unit 21, a moving object orbit detection unit 22, a moving object position and relative speed detection unit 23, a risk estimation unit 24, and a display control unit 25.

As will be described later, the moving object detection unit 21 detects an object in an image captured by the wide-angle rear camera 11 using a pattern matching method for detecting an object reflected in an image by checking the matching between the image and a predetermined pattern and an optical flow method for detecting an object reflected in an image by analyzing the direction and speed of the point in the image moving with the passage of time. In addition, as will be described later, when an object is detected by pattern matching, the moving object detection unit 21 can also detect a stationary object.

The moving object orbit detection unit 22 detects the orbit of the object in the image from the position and movement of the object in the image, which has been detected by the moving object detection unit 21, and the movement of the vehicle detected by the vehicle speed sensor 12 and the steering angle sensor 13.

The moving object position and relative speed detection unit 23 detect the position of the object in the image and the relative speed of the object with respect to the vehicle on the basis of the orbit of the object in the image detected by the moving object orbit detection unit 22.

The risk estimation unit 24 estimates the risk of the object in the image on the basis of the position and relative speed of the object in the image detected by the moving object position and relative speed detection unit 23.

As will be described later, the display control unit 25 displays a driving assistance display for assisting the driving of the driver on the display 30 from the position and relative speed of the object detected by the moving object position and relative speed detection unit 23, the risk estimated by the risk estimation unit 24, and the state of the vehicle detected by the vehicle speed sensor 12, the steering angle sensor 13, and the shift position sensor 14.

The display 30 displays a rear image captured by the wide-angle rear camera 11. As the display 30, for example, a monitor provided near the driver's seat or a head-up display that displays an image on a windshield or the like can be used.

In addition, in the present embodiment, the driving assistance display device 1 detects an object near the vehicle by image recognition for the image captured by the wide-angle rear camera 11. However, in order to detect the object near the vehicle, sensors, such as a radar, a lidar, and a sonar, may be separately provided.

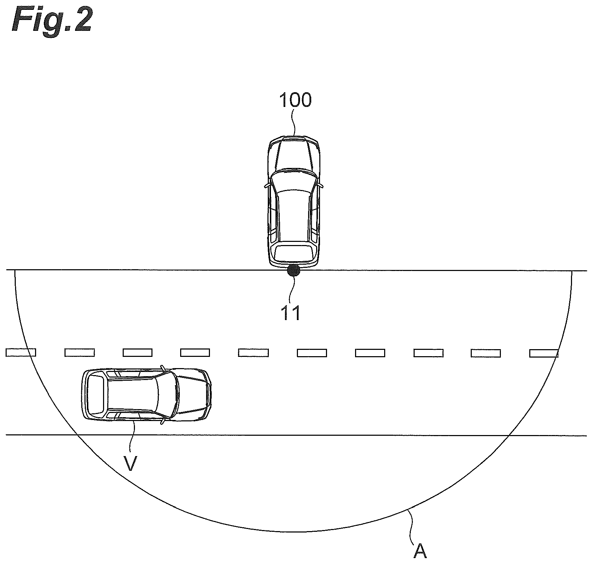

Hereinafter, the operation of the driving assistance display device 1 of the present embodiment will be described. As shown in Fig. 2, the driving assistance display device 1 of the present embodiment is applied in order to assist the driving of the driver, who is in difficulty in seeing the rear of a host vehicle 100, when the host vehicle 100 reverses to come out to the road from the parking position and when the host vehicle 100 reverses into the parking position. The driving assistance display device 1 detects another vehicle V and the like within the assistance area A, which is an imaging range of the wide-angle rear camera 11, and notifies the driver of the detection result.

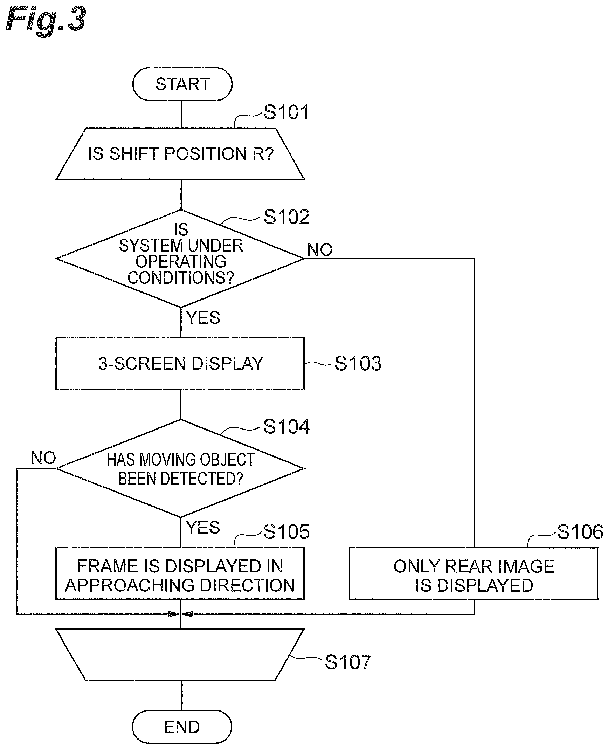

First, a basic operation of the driving assistance display device 1 of the present embodiment will be described. As shown in Fig. 3, the shift position sensor 14 of the driving assistance display device 1 of the present embodiment is in an operating state while the shift position of the transmission of the host vehicle 100 is the Reverse position (S101).

The display control unit 25 of the ECU 20 of the driving assistance display device 1 determines whether or not the detection values of the vehicle speed sensor 12 and the steering angle sensor 13 satisfy the operating conditions of a system, which sends notification of the moving object from the lateral side, among the driving assistance systems of the driving assistance display device 1 (S102).

Methods of detecting a moving object include a radar, a lidar, a sonar, image recognition, and the like. However, depending on the performance of a sensor or the accuracy of image recognition, there is a risk of incorrect detection or non-detection according to the conditions of the host vehicle 100, such as a vehicle speed or a steering angle. Incorrect detection and non-detection causes a driver to distrust the driving assistance system of the driving assistance display device 1. In the present embodiment, therefore, the driving assistance system that sends notification of the moving object from the lateral side is not operated when the vehicle speed or the steering angle become equal to or larger than a predetermined threshold value.

When the driving assistance display device 1 notifies the driver of a moving object on the lateral side of the host vehicle 100 only when the host vehicle 100 starts to move, for example, as in the situation shown in Fig. 2, a case where the speed is about 0 km/h or a case where the speed is equal to or less than 0.1 to 3 km/h or equal to or less than 4 km/h can be set as operating conditions of the driving assistance system that notifies the driver of the moving object on the lateral side of the host vehicle 100.

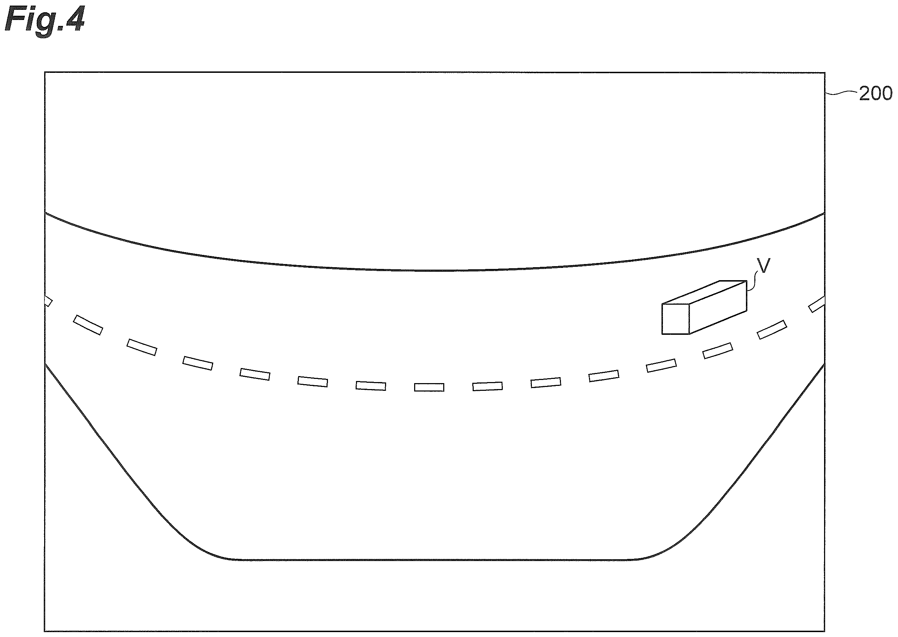

When the operating conditions of the driving assistance system that sends notification of the moving object on the lateral side are satisfied (S102), the display control unit 25 divides the image captured by the wide-angle rear camera 11 into three parts and displays them on the display 30 (S103). As shown on a display screen 200 in Fig. 4, the original image captured by the wide-angle rear camera 11 has a viewing angle of 180□. Due to aberration of the wide-angle lens, left and right end portions of the image are distorted so as to look small upward toward the left and right end portions.

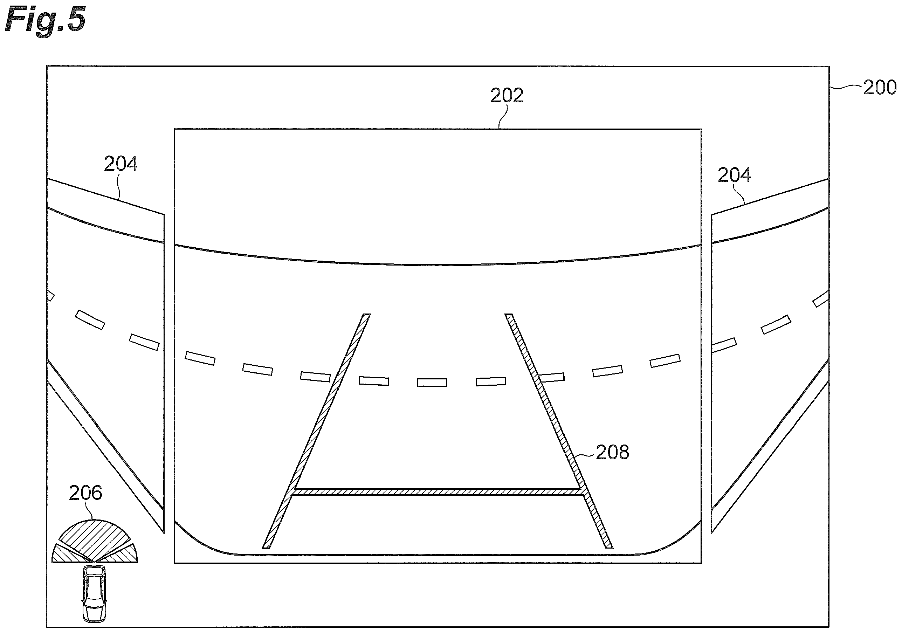

In the present embodiment, as shown in Fig. 5, the image captured by the wide-angle rear camera 11 is divided into three parts of left and right rear side screens 204 and a middle rear screen 202, and the result is displayed on the display screen 200. There is a predetermined gap between each of the left and right rear side screens 204 and the middle rear screen 202 so that the driver can easily see that the image captured by the wide-angle rear camera 11 is divided. In this case, the gap can be set to about 2 to 10 mm.

The display control unit 25 performs distortion correction to correct distortion due to aberration of the wide-angle lens for the images of the left and right rear side screens 204. Corresponding to the distortion correction performed on the left and right rear side screens 204, the display control unit 25 displays the left and right rear side screens 204 in a trapezoidal shape having opposite sides perpendicular to the left and right of the screen. The display control unit 25 performs display such that the widths of the top and bottom sides of the rear side screens 204 are reduced on the left side of the left rear side screen 204 and the right side of the right rear side screen 204. In addition, the display control unit 25 displays the left and right rear side screens 204 such that the top and bottom sides of the left rear side screen 204 face upward in the left direction and the top and bottom sides of the right rear side screen 204 face upward in the right direction.

The display control unit 25 displays the middle rear screen 202 in a rectangular shape. The display control unit 25 displays a display range symbol 206 indicating that the image of each of the left and right rear side screens 204 and the middle rear screen 202 is an image at which location of the host vehicle 100. In addition, the display control unit 25 displays a vehicle width line 208, which is a driving reference when a driver reverses the host vehicle 100, on the middle rear screen 202. As a result, images of the left and right rear side screens 204 and the middle rear screen 202 become different images.

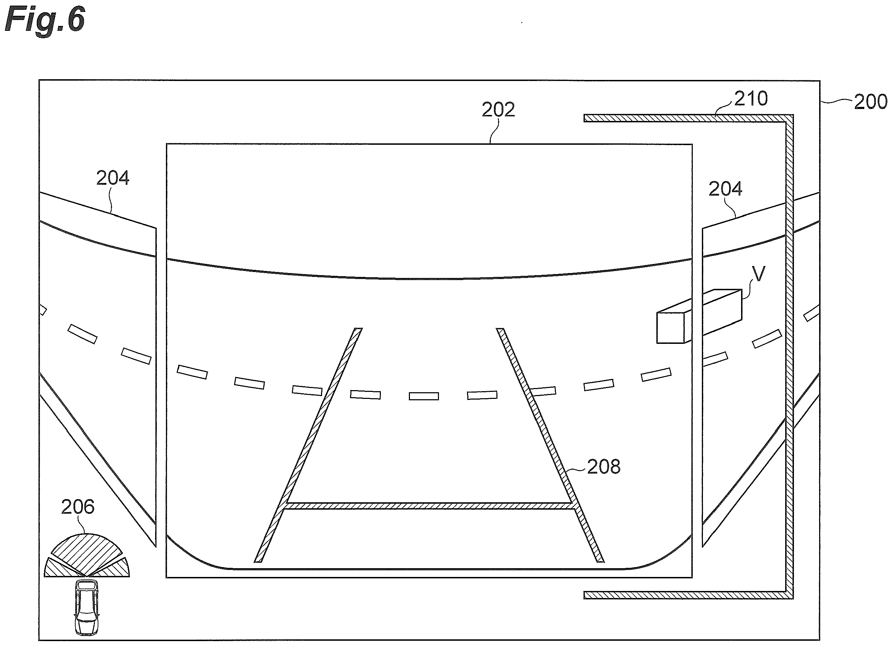

If the moving object detection unit 21 of the ECU 20 of the driving assistance display device 1 detects a moving object, such as another vehicle V, using an optical flow method to be described later (S104), the display control unit 25 displays a moving object approach detection frame 210 that surrounds parts of the rear screen 202 and the rear side screen 204 on the side where another vehicle V approaches the host vehicle 100 from a direction in which another vehicle V approaches, as shown in Fig. 6 (S105). The range surrounded by the moving object approach detection frame 210 shows a detection range based on the optical flow in the images of the rear side screen 204 and the rear screen 202. In addition, in the present embodiment, also when a stationary object, such as a pedestrian, is present near the host vehicle 100, the driver is notified of the situation. The operation in this case will be described later.

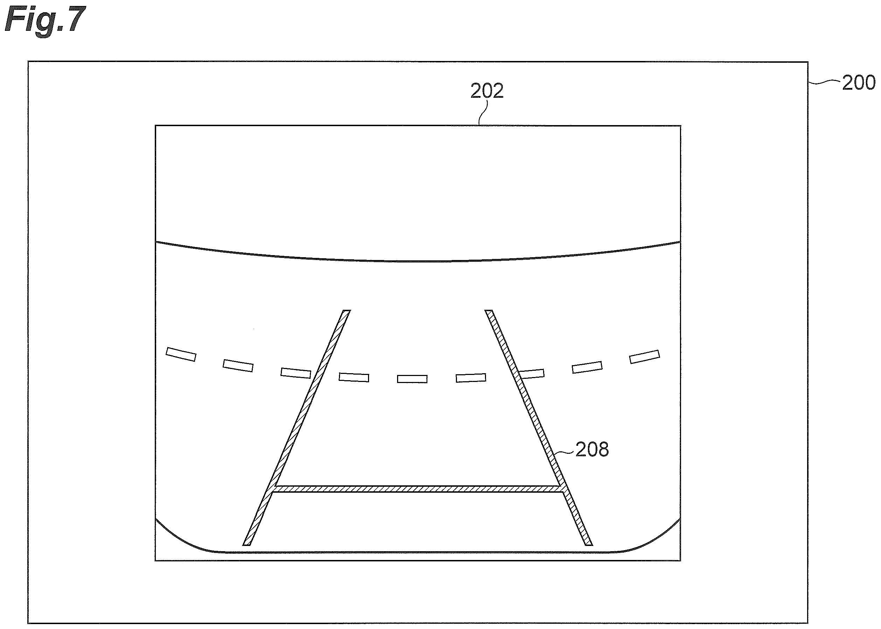

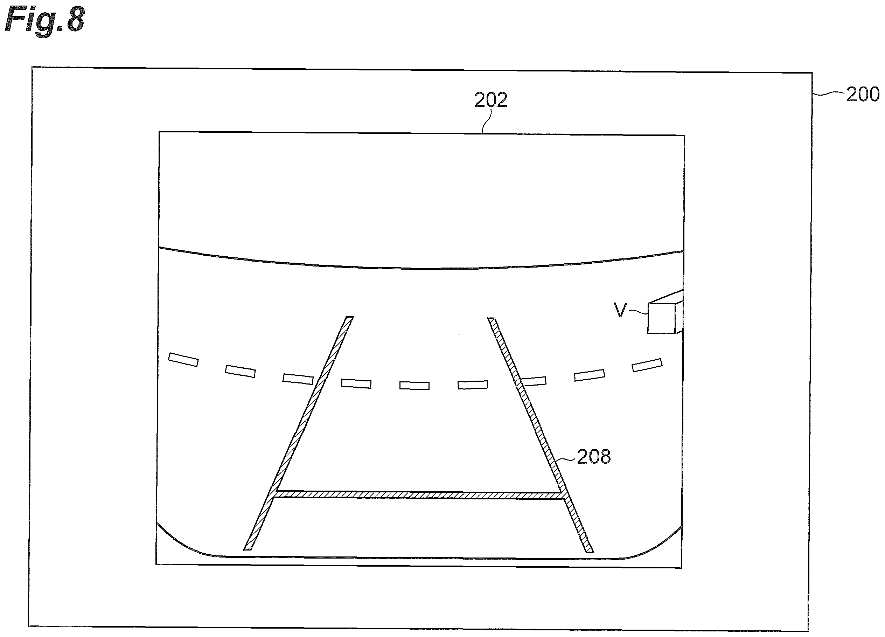

When the vehicle speed or the steering angle exceeds a predetermined threshold value and does not satisfy the operating conditions of the driving assistance system that sends notification of a moving object on the lateral side (S102), the display control unit 25 displays only the middle rear screen 202 without operating a part of the driving assistance system as shown in Fig. 7 (S106). In this case, as shown in Fig. 8, when an object, such as another vehicle V, has approached near the host vehicle 100, the driver can check the situation through the rear screen 202. Therefore, even when a driving assistance system that sends notification of a moving object on the lateral side is not operating, the driving assistance display device 1 can be used as a monitor for driving assistance when reversing the host vehicle 100. In addition, even when a driving assistance system that sends notification of a moving object on the lateral side is not operating, a pedestrian and the like in the image of the middle rear screen 202 are detected using a pattern matching method, which will be described later, and the driver is notified of the detection result.

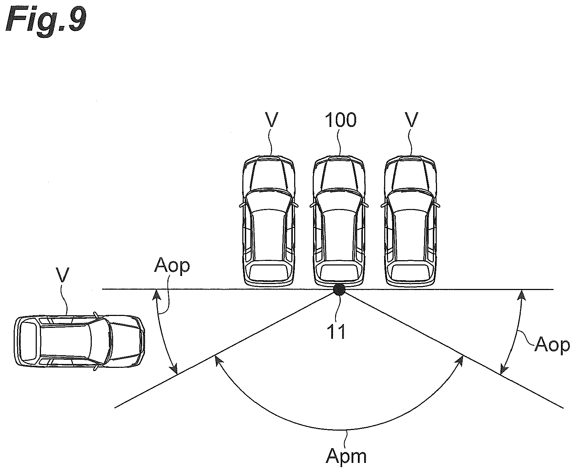

Hereinafter, an operation of the driving assistance display device 1 of the present embodiment to detect an object will be described. As shown in Fig. 9, in the present embodiment, in the optical flow assistance area Aop which is a range displayed on the rear side screen 204, object detection is performed using the optical flow, which is to detect an object reflected in the image by analyzing the direction and speed of the point in the image moving with the passage of time. On the other hand, in the pattern matching assistance area Apm which is a range displayed on the rear screen 202, object detection is performed by pattern matching to detect an object reflected in the image by checking the matching between the image and a predetermined pattern.

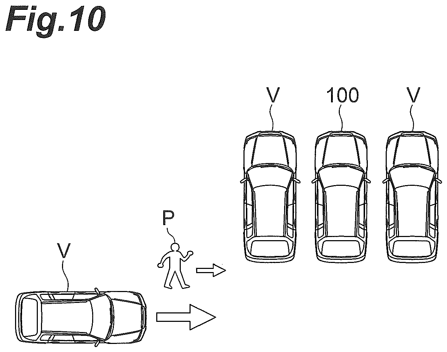

In the example shown in Fig. 9, another vehicle V is approaching the host vehicle 100 from the optical flow assistance area Aop, and the moving object detection unit 21 of the ECU 20 of the driving assistance display device 1 detects another vehicle V using the optical flow. In the example shown in Fig. 10, another vehicle V and a pedestrian P are approaching the host vehicle 100 from the optical flow assistance area Aop, and the moving object detection unit 21 detects another vehicle V and the pedestrian P using the optical flow. In both the examples, a moving object approaching from the distant place can be detected in the optical flow assistance area Aop. In the optical flow assistance area Aop, it is not possible to detect a stationary object. However, since there is no possibility that a stationary object will be brought into contact with the host vehicle 100 unless the stationary object is located near the host vehicle 100, only a moving object is detected using the optical flow method in the optical flow assistance area Aop.

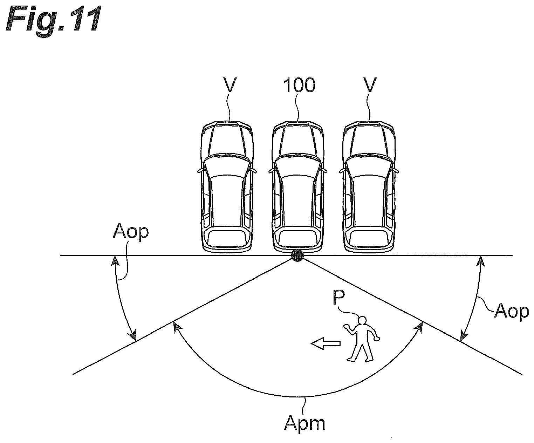

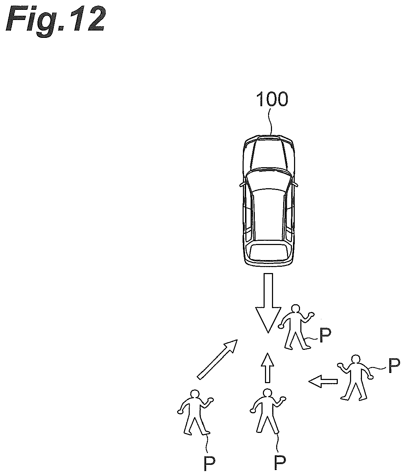

In the example shown in Fig. 11, a pedestrian P is approaching the host vehicle 100 from the pattern matching assistance area Apm, and the moving object detection unit 21 of the ECU 20 of the driving assistance display device 1 detects the pedestrian P by pattern matching. In the example shown in Fig. 12, the pedestrian P who is moving to the host vehicle 100 from the pattern matching assistance area Apm and the stationary pedestrian P are present, and the moving object detection unit 21 detects each pedestrian P by pattern matching. In both the examples, a moving object and a stationary object near the host vehicle 100 can be detected in the pattern matching assistance area Apm. In the pattern matching assistance area Apm, there is a possibility that a stationary object will be brought into contact with the host vehicle 100 since the pattern matching assistance area Apm is a range where the host vehicle 100 moves. Accordingly, it is also necessary to detect a stationary object. In the pattern matching assistance area Apm, the moving object detection unit 21 mainly checks the matching between an object in the image and patterns of people as patterns for matching. In addition, a stationary object near the host vehicle 100 may also be detected using a sonar.

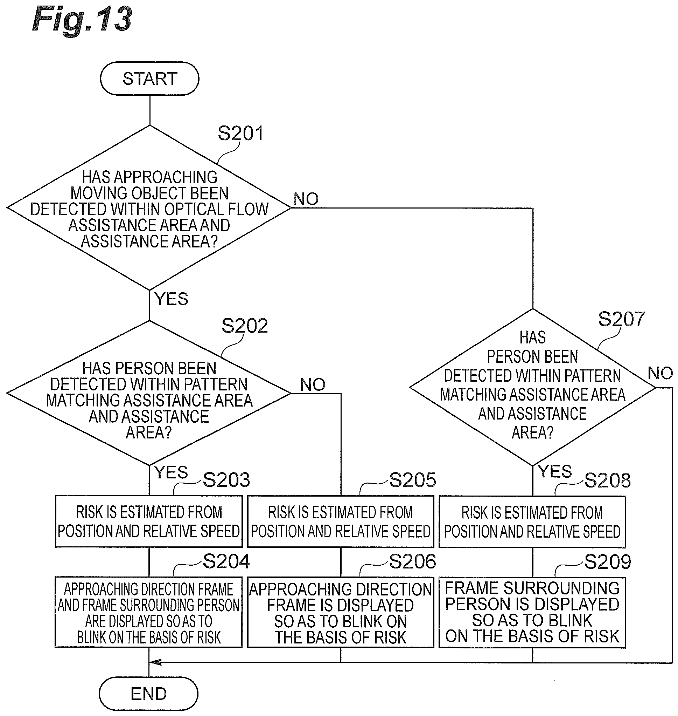

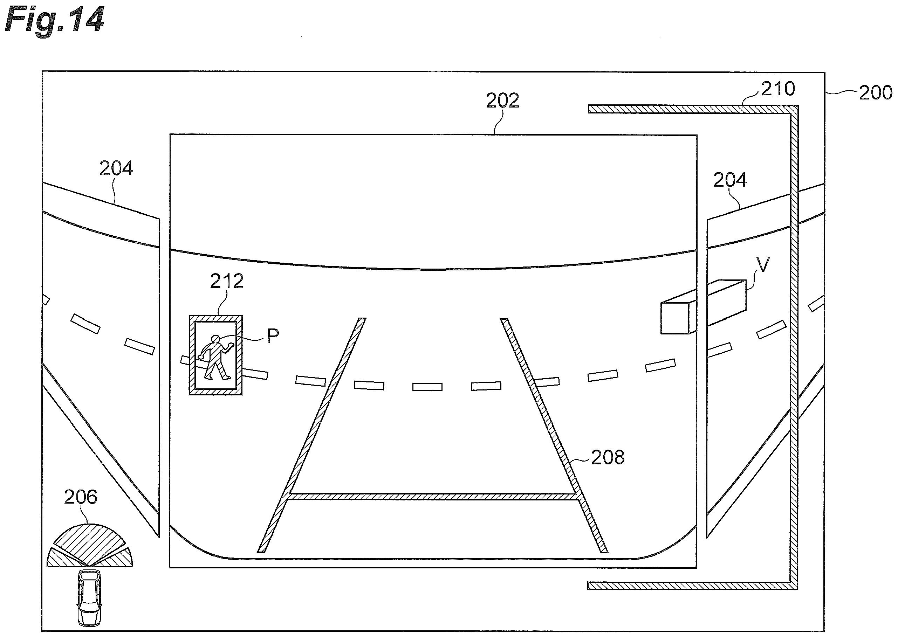

As shown in Fig. 13, when the moving object detection unit 21 of the ECU 20 of the driving assistance display device 1 has detected that a moving object, such as another vehicle V or a person, is approaching within the optical flow assistance area Aop and the assistance area A (S201), if the moving object detection unit 21 detects that an object, such as the pedestrian P, is present within the pattern matching assistance area Apm and the assistance area A (S202), the risk estimation unit 24 of the ECU 20 estimates the risk from the position and relative speed of the object (S203). On the basis of the risk, the display control unit 25 of the ECU 20 displays the moving object approach detection frame 210 surrounding a part of the rear side screen 204 on the side where another vehicle V approaches and a pedestrian detection frame 212 surrounding the pedestrian P, which are shown in Fig. 14, on the rear side screen 204 and the rear screen 202, respectively, so as to blink (S204).

As the position of an object becomes closer to the host vehicle 100, the risk estimation unit 24 estimates a higher risk of the object. As the relative speed of the object with respect to the host vehicle 100 becomes larger, the risk estimation unit 24 estimates a higher risk of the object. As the risk estimated by the risk estimation unit 24 becomes higher, the display control unit 25 displays the moving object approach detection frame 210 and the pedestrian detection frame 212 earlier. As the risk estimated by the risk estimation unit 24 becomes higher, the display control unit 25 reduces an interval of blinking of the moving object approach detection frame 210 and the pedestrian detection frame 212.

Alternatively, as the risk estimated by the risk estimation unit 24 becomes higher, the display control unit 25 can display the moving object approach detection frame 210 and the pedestrian detection frame 212 such that the brightness of the moving object approach detection frame 210 and the pedestrian detection frame 212 is increased. Alternatively, as the risk estimated by the risk estimation unit 24 becomes higher, the display control unit 25 can display the moving object approach detection frame 210 and the pedestrian detection frame 212 with changed color. For example, as the risk estimated by the risk estimation unit 24 becomes higher, the display control unit 25 can display the moving object approach detection frame 210 and the pedestrian detection frame 212 with color change from blue and yellow to red.

When the moving object detection unit 21 has detected that a moving object, such as another vehicle V or a person, is approaching within the optical flow assistance area Aop and the assistance area A (S201), if the moving object detection unit 21 does not detect that an object, such as the pedestrian P, is present within the pattern matching assistance area Apm and the assistance area A (S202), the risk estimation unit 24 estimates the risk from the position and relative speed of the object (S205). As described above, on the basis of the risk, the display control unit 25 displays the moving object approach detection frame 210, which surrounds a part of the rear side screen 204 on the side where another vehicle V approaches, which is shown in Fig. 6, on the rear side screen 204 so as to blink (S206).

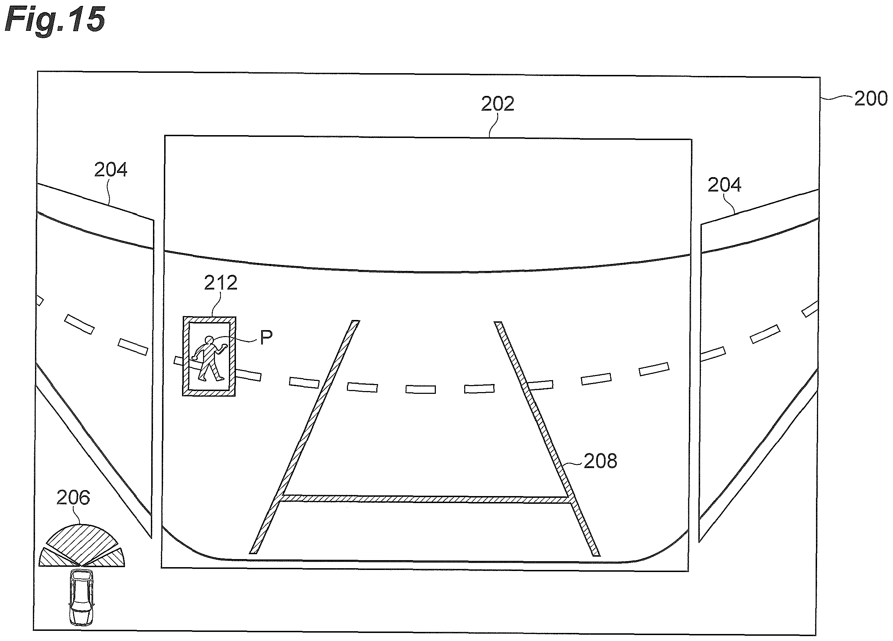

When the moving object detection unit 21 has detected that a moving object, such as another vehicle V or a person, is approaching within the optical flow assistance area Aop and the assistance area A (S201), if the moving object detection unit 21 detects that an object, such as the pedestrian P, is present within the pattern matching assistance area Apm and the assistance area A (S207), the risk estimation unit 24 estimates the risk from the position and relative speed of the object (S208). As described above, on the basis of the risk, the display control unit 25 displays the moving object approach detection frame 210 surrounding a part of the rear side screen 204 on the side where another vehicle V approaches and the pedestrian detection frame 212 surrounding the pedestrian P, which are shown in Fig. 15, on the rear side screen 204 and the rear screen 202, respectively, so as to blink (S204).

According to the present embodiment, in the driving assistance display device 1 including the wide-angle rear camera 11 and the ECU 20 and the display 30 that display a rear image captured by the wide-angle rear camera 11, the display control unit 25 of the ECU 20 and the display 30 display a rear image on the left and right rear side screens 204 and the middle rear screen 202 by dividing the rear image. Therefore, the driver can easily see where he or she is viewing. In addition, since the display control unit 25 and the display 30 do not display the same image on the left and right rear side screens 204 and the middle rear screen 202, the driver can easily see the distance between the object in the rear image and the host vehicle 100. In addition, since the display control unit 25 performs distortion correction to correct the distortion of rear images displayed on the left and right rear side screens 204, the driver can see clear rear images after the distortion correction. In addition, since the display control unit 25 controls the shapes of the left and right rear side screens 204 to become shapes corresponding to correction distortion, the driver can easily see from where the object in the rear image is approaching.

In addition, the display control unit 25 performs distortion correction to correct the distortion of peripheral images displayed on the left and right rear side screens 204, which is caused by aberration of the wide-angle lens, and narrows the widths of the top and bottom sides of the rear side screens 204 on the left side of the left rear side screen 204 and the right side of the right rear side screen 204, so that the left rear side screen 204 has a trapezoidal shape having top and bottom sides facing upward in the left direction and the right rear side screen 204 has a trapezoidal shape having top and bottom sides facing upward in the right direction. Therefore, the driver can easily see where the rear image shows. In addition, the driver can easily see from where the object in the rear image is approaching.

In addition, the display control unit 25 displays the left and right rear side screens 204 and the middle rear screen 202 with a gap therebetween. Therefore, the driver can easily see that the left and right rear side screens 204 and the middle rear screen 202 are separated from each other.

In addition, when an object reflected in a rear image of one of the left and right side screens 204 approaches the host vehicle 100, the display control unit 25 displays the moving object approach detection frame 210 indicating the approach of the object. Therefore, the driver can easily notice the object approaching from the lateral side even when the driver is watching the middle rear screen 202.

That is, in the present embodiment, it is easy to use the display screen 200 as a back guide monitor by increasing the middle rear screen 202. By displaying the rear screen 202 in a large size and the rear side screen 204 in a small size, an object approaching from the lateral side becomes small in the screen. However, even if the driver is watching the middle rear screen 202, the driver can easily notice the object approaching from the lateral side through the moving object approach detection frame 210. In addition, in the present embodiment, there is no hassle to switch from normal screen to wide-angle screen.

In addition, according to the present embodiment, in the driving assistance display device 1 including the wide-angle rear camera 11 and the ECU 20 and the display 30 that display a rear image captured by the wide-angle rear camera 11, the display control unit 25 of the ECU 20 and the display 30 can display the moving object approach detection frame 210 and the pedestrian detection frame 212, which assist the driving of the driver of the host vehicle 100, while displaying a rear image on a plurality of screens by dividing the rear image, and change the number of screens displayed when the moving object approach detection frame 210 is displayed and when the moving object approach detection frame 210 is not displayed. Therefore, the driver can more easily recognize whether the system that displays the moving object approach detection frame 210 is operating or not.

In addition, the display control unit 25 can display a rear image on the left and right rear side screens 204 and the middle rear screen 202 by dividing the rear image, and displays the left rear side screen 204 and the middle rear screen 202 when the moving object approach detection frame 210 and the pedestrian detection frame 212 are displayed and displays only the middle rear screen 202 when the moving object approach detection frame 210 is not displayed. Therefore, the driver can easily recognize whether the system that displays the moving object approach detection frame 210 is operating or not. In addition, since the middle rear screen 202 is displayed even when the system that displays the moving object approach detection frame 210 is not operating, the middle rear screen 202 can be used for rear monitoring.

In addition, the display control unit 25 displays the moving object approach detection frame 210 indicating the approach of the object when the object reflected in the left and right rear side screens 204 approaches the host vehicle 100. Therefore, the driver can easily notice the object approaching from the lateral side even when the driver is watching the middle screen.

In addition, the display control unit 25 does not display the moving object approach detection frame 210 when either the speed or the steering angle of the host vehicle 100 is equal to or larger than a predetermined threshold value. Although methods of detecting the approach of an object include a radar, a lidar, a sonar, image recognition, and the like, there is a risk of incorrect detection or non-detection when the speed or the steering angle of a vehicle is large. Incorrect detection or non-detection cause a driver to distrust the system. For this reason, by not displaying the moving object approach detection frame 210 when the speed and the steering angle of the host vehicle 100 are equal to or larger the threshold value, it is possible to prevent incorrect detection or non-detection of the object approaching the host vehicle 100.

In addition, according to the present embodiment, in the driving assistance display device 1 including the wide-angle rear camera 11 and the ECU 20 and the display 30 that display a rear image captured by the wide-angle rear camera 11, the display control unit 25 of the ECU 20 and the display 30 display a rear image on the left and right rear side screens 204 and the middle rear screen 202 by dividing the rear image, detect an object reflected in the image by checking the matching between the image and a predetermined pattern for the image of the middle rear screen 202, detect an object reflected in the image by analyzing the direction and speed of the point in the image moving with the passage of time for the images of the left and right rear side screens 204, and display the moving object approach detection frame 210 or the pedestrian detection frame 212 indicating the presence of the detected object. Therefore, a stationary person near the front of the host vehicle 100, a person which is present near the front of the host vehicle 100 when the host vehicle 100 is moving, and the like can be detected using the pattern matching method to check the matching between an image and a predetermined pattern, and the driver can be notified of the presence of the detected person and the like. In addition, a person, a vehicle, and the like approaching from the distant place on the lateral side of the host vehicle 100 can be detected using the optical flow method to analyze the direction and speed of the point in the image moving with the passage of time, and the driver can be notified of the presence of the detected person, vehicle, and the like. Therefore, it is possible to detect and display an object more appropriately according to the position, speed, and type of the object.

In addition, the display control unit 25 displays the pedestrian detection frame 212 surrounding the pedestrian P when the pedestrian P reflected in the image of the middle rear screen 202 is detected, and displays the moving object approach detection frame 210 surrounding at least a part of either of the left and right rear side screens 204 where the object has been detected when an object reflected in the image of either of the left and right rear side screens 204 is detected. Therefore, the driver can recognize that the object detection methods in the middle rear screen 202 and the left and right rear side screens 204 are different. That is, it is possible to notify the driver that only people are detected in the middle rear screen 202 by changing the method of surrounding a frame in the middle rear screen 202 and the rear side screen 204.

In many cases, drivers check the lateral side mainly when their vehicles start to move and check the middle of the rear side when their vehicles start to move and when the vehicles are moving. Since it is necessary to check an object more quickly while a vehicle is moving, the position of the object can also be recognized by surrounding the object with the pedestrian detection frame 212.

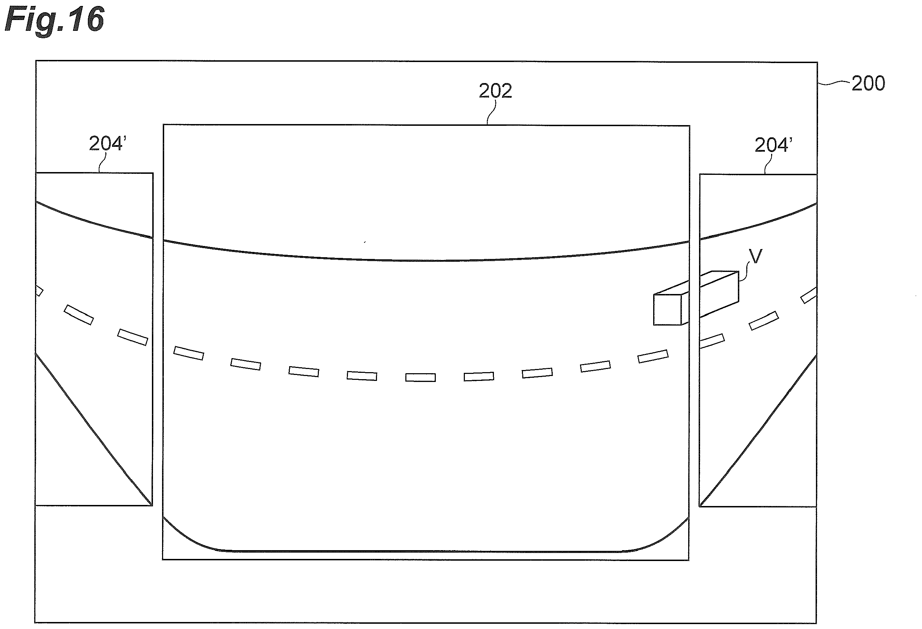

When the processing load of the driving assistance display device 1 in the above-described embodiment is high, the size of a rear side screen 204' may be simply reduced according to distortion correction as shown in Fig. 16. As described above, the moving object approach detection frame 210 for notifying a driver that a moving object has been detected is changed according to the object detection range. When the moving object approach detection frame 210 is located within the rear side screen 204', the moving object approach detection frame 210 is displayed only on the rear side screen 204'.

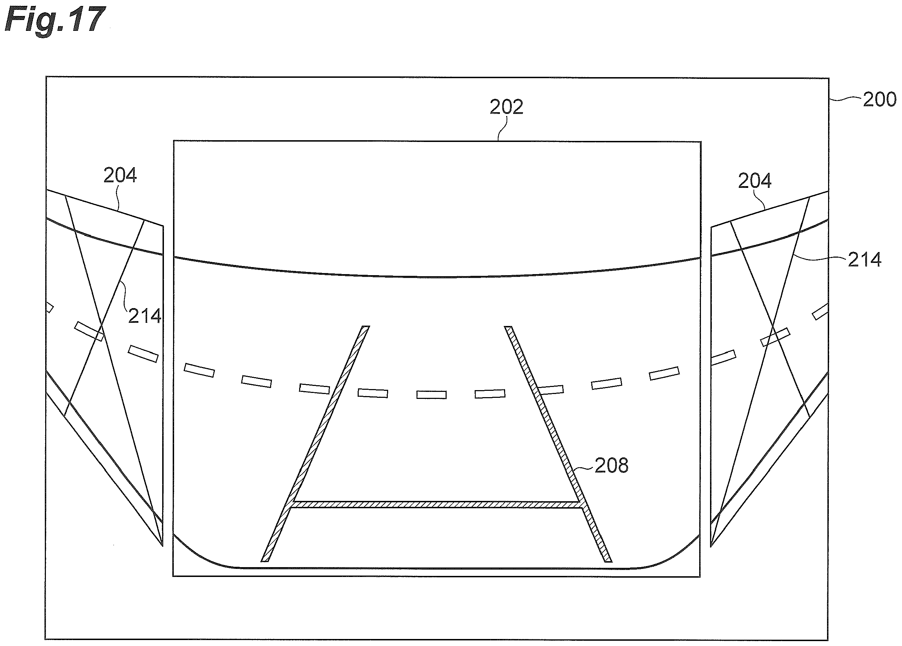

In addition, in the embodiment described above, the rear side screen 204 is removed when the driving assistance system is not operating. However, if the rear side screen 204 is removed when the driving assistance system is not operating, some drivers may feel that they cannot see the rear side screen 204 even though they want to see the rear side screen 204. For this reason, as shown in Fig. 17, it is also possible to display a non-operating display line 214 on the rear side screen 204 while displaying the rear side screen 204 when the driving assistance system is not operating.

### Industrial Applicability

According to the image display device of an embodiment of the present invention described above, it is possible to detect and display an object more appropriately according to the speed and the type.

### Reference Signs List

1: driving assistance display device
11: wide-angle rear camera
12: vehicle speed sensor
13: steering angle sensor
14: shift position sensor
20: ECU
21: moving object detection unit
22: moving object orbit detection unit
23: moving object position and relative speed detection unit
24: risk estimation unit
25: display control unit
30: display
100: host vehicle
200: display screen
202: rear image
204, 204': rear side image
206: display range symbol
208: vehicle width line
210: moving object approach detection frame
212: pedestrian detection frame
214: non-operating display line
A: assistance area
Aop: optical flow area
Apm: pattern matching area
V: another vehicle
P: pedestrian

## Claims

1. An image display device comprising:
a vehicle speed sensor (12) that detects a speed of a vehicle (100),
a steering angle sensor (13) that detects a steering angle of the vehicle (100), an image acquisition unit (11) that acquires a peripheral image of the vehicle (100);
and
an image display unit (30) that displays the peripheral image acquired by the image acquisition unit (11),
wherein the image display unit (30) displays the peripheral image on a left side screen (204), a middle screen (202), and a right side screen (204) by dividing the peripheral image, detects a pedestrian (P) reflected in the peripheral image by a pattern matching by checking matching between the peripheral image and a predetermined pattern for the peripheral image of the middle screen (202), detects another vehicle (V) reflected in the peripheral image using an optical flow by analyzing direction and speed of a point in the peripheral image moving with passage of time for the peripheral image of each of the left and right side screens (204),
wherein the image display unit (30) further displays a pedestrian detection frame (212) surrounding the pedestrian (P) as a driving assistance display showing presence of the pedestrian (P) when the pedestrian (P) reflected in the peripheral image of the middle screen (202) is detected, and displays a moving object approach detection frame (210) surrounding a part of either the left side screen (204) or the right side screen (204) on the side where another vehicle (V) approaches where the another vehicle (V) has been detected, as the driving assistance display when the another vehicle (V) reflected in the peripheral image of either the left side screen (204) or the right side screen (204) is detected,
the image display unit (30) does not display the moving object approach detection frame (210) when either the speed or the steering angle of the host vehicle (100) is equal to or larger than a predetermined threshold value,
wherein the peripheral image is a rear image captured by a wide-angle rear camera and the image display unit (30) displays the rear image on the left and right rear side screens (204) and on the middle rear screen (202) by dividing the rear image and
wherein the image display device has a display control unit (25) which performs distortion correction to correct the distortion of the images displayed on the left and right rear side screens (204),
**characterized in that**
the left and right rear side screens (204) perform display in a trapezoidal shape,
the widths of the top and bottom sides of the left and right rear side screens (204) are reduced on the left side of the left rear side screen (204) and the right side of the right rear side screen (204), and
wherein there is a predetermined gap between each of the left and right rear side screens (204) and the middle rear screen (202).

2. The image display device of claim 1,
wherein the image display device is configured in order to, when the processing load of the image display device is high, the size of a rear side screen (204') is reduced according to distortion correction,
wherein the image display device is able to change the moving object approach detection frame (210) for notifying a driver that a moving object has been detected according to the object detection range, and
wherein the image display device is able to display the moving object approach detection frame (210) only on the rear side screen (204') when the moving object approach detection frame (210) is located within the rear side screen (204').

3. The image display device of claim 1,
wherein the image display device has an ECU (20) which has a display control unit (25) which performs distortion correction to correct distortion due to aberration of the wide-angle lenses for the images of the left and right rear screens (204), and
wherein the display control unit (25) displays the left and right rear side screens (204) such that the top and bottom sides of the left rear side screen (204) face upward in the left direction and the top and bottom sides of the right rear side screen (204) face upward in the right direction.

4. The image display device of claim 3 or anyone of the other preceding claims, wherein the image display device has an ECU (20) which has a risk estimation unit (24) and a display control unit (25),
wherein the risk estimation unit (24) is configured to estimate a higher risk of the object as the position of an object becomes closer to the host vehicle (100) or as the relative speed of the object with respect to the host vehicle (100) becomes larger,
wherein the display control unit (25) is configured in order to, as the risk estimated by the risk estimation unit (24) becomes higher, display the moving object approach detection frame (210) and the pedestrian detection frame (212) earlier or to reduce an interval of blinking of the moving object approach detection frame (210) and the pedestrian detection frame (212).

5. The image display device of claim 4,
wherein the display control unit (25) is configured in order to, as the risk estimated by the risk estimation unit (24) becomes higher, display the moving object approach detection frame (210) and the pedestrian detection frame (212) such that the brightness of the moving object approach detection frame (210) and the pedestrian detection frame (212) is increased, or to display the moving object approach detection frame (210) and the pedestrian detection frame (212) with changed color.

6. The image display device of anyone of claims 1, 4 or 5,
wherein, when the moving object approach detection frame (210) is not displayed, only the middle screen (202) is displayed while not displaying the left side screen (204) and the right side screen (204).

7. The image display device of claim 6,
wherein, when the moving object approach detection frame (210) is not displayed, the image display unit (30) displays the pedestrian detection frame (212).

8. Vehicle, in which an image display device according to one of the preceding claims is installed and which has a transmission,
wherein the image display device has a shift position sensor (14), and
wherein the image display device operates if the shift position sensor (14) is in an operating state while the shift position of the transmission is in a Reverse position.

## Patentansprüche

1. Bildanzeigevorrichtung, die aufweist:
einen Fahrzeuggeschwindigkeitsmesswertgeber (12), der eine Geschwindigkeit eines Fahrzeugs (100) detektiert,
einen Lenkwinkelmesswertgeber (13), der einen Lenkwinkel des Fahrzeugs (100) detektiert,
eine Bilderlangungseinheit (11), die ein Umfangsbild des Fahrzeugs (100) erlangt,
und
eine Bildanzeigeeinheit (30), die das Umfangsbild, das durch die Bilderlangungseinheit (11) erlangt wird, anzeigt,
wobei die Bildanzeigeeinheit (30) das Umfangsbild auf einem linken Seitenbildschirm (204), einem mittleren Bildschirm (202) und einem rechten Seitenbildschirm (204) durch ein Teilen des Umfangsbilds anzeigt, einen Fußgänger (P), der in dem Umfangsbild widergespiegelt wird, durch einen Musterabgleich durch einen Überprüfungsabgleich zwischen dem Umfangsbild und einem vorgegebenen Muster für das Umfangsbild des mittleren Bildschirms (202) detektiert, ein anderes Fahrzeug (V), das in dem Umfangsbild widergespiegelt wird, unter Verwendung eines optischen Flusses durch ein Analysieren einer Richtung und Geschwindigkeit eines Punkts in dem Umfangsbild, der sich mit einem Verstreichen von Zeit für das Umfangsbild von jedem der linken und rechten Seitenbildschirme (204) bewegt, detektiert,
wobei die Bildanzeigeeinheit (30) des Weiteren einen Fußgängerdetektionsrahmen (212), der den Fußgänger (P) umgibt, als eine Fahrunterstützungsanzeige anzeigt, die eine Anwesenheit des Fußgängers (P) zeigt, wenn der Fußgänger (P), der in dem Umfangsbild des mittleren Bildschirms (202) wiedergespiegelt wird, detektiert wird, und einen Bewegungsobjektannäherungsdetektionsrahmen (210), der einen Teil von entweder dem linken Seitenbildschirm (204) oder dem rechten Seitenbildschirm (204) auf der Seite umgibt, bei der sich ein anderes Fahrzeug (V) nähert, bei der das andere Fahrzeug (V) detektiert worden ist, als die Fahrunterstützungsanzeige anzeigt, wenn das andere Fahrzeug (V), das in dem Umfangsbild von entweder dem linken Seitenbildschirm (204) oder dem rechten Seitenbildschirm (204) wiedergespiegelt wird, detektiert wird,
die Bildanzeigeeinheit (30) den Bewegungsobjektannäherungsdetektionsrahmen (210) nicht anzeigt, wenn entweder die Geschwindigkeit oder der Lenkwinkel des Trägerfahrzeugs (100) gleich einem vorgegebenen Schwellenwert oder größer als dieser ist,
wobei das Umfangsbild ein hinteres Bild ist, das durch eine Weitwinkelrückfahrkamera erfasst wird, und die Bildanzeigeeinheit (30) das hintere Bild auf den Links-und-rechts-hinten-Seitenbildschirmen (204) und auf dem Mitte-hinten-Bildschirm (202) durch ein Teilen des hinteren Bilds anzeigt, und
wobei die Bildanzeigevorrichtung eine Anzeigesteuerungseinheit (25) hat, die eine Verzerrungskorrektur durchführt, um die Verzerrung der Bilder, die auf den Links-und-rechts-hinten-Seitenbildschirmen (204) angezeigt werden, zu korrigieren,
**dadurch gekennzeichnet, dass**
die Links-und-rechts-hinten-Seitenbildschirme (204) eine Anzeige in einer trapezförmigen Form durchführen,
die Breiten der Ober- und Bodenseiten der Links-und-rechts-hinten-Seitenbildschirme (204) auf der linken Seite des Links-hinten-Seitenbildschirms (204) und der rechten Seite des Rechts-hinten-Seitenbildschirms (204) reduziert werden, und
wobei es einen vorgegebenen Spalt zwischen jedem der Links-und-rechts-hinten-Seitenbildschirme (204) und dem Mitte-hinten-Bildschirm (202) gibt.

2. Bildanzeigevorrichtung nach Anspruch 1,
wobei die Bildanzeigevorrichtung konfiguriert ist, um, wenn die Verarbeitungslast der Bildanzeigevorrichtung hoch ist, die Größe eines Hinten-Seitenbildschirms (204') gemäß einer Verzerrungskorrektur zu reduzieren,
wobei die Bildanzeigevorrichtung imstande ist, den Bewegungsobjektannäherungsdetektionsrahmen (210) für ein Benachrichtigen eines Fahrers, dass ein Bewegungsobjekt gemäß dem Objektdetektionsbereich detektiert worden ist, zu ändern, und
wobei die Bildanzeigevorrichtung imstande ist, den Bewegungsobjektannäherungsdetektionsrahmen (210) einzig auf dem Hinten-Seitenbildschirm (204') anzuzeigen, wenn sich der Bewegungsobjektannäherungsdetektionsrahmen (210) innerhalb des Hinten-Seitenbildschirms (204') befindet.

3. Bildanzeigevorrichtung nach Anspruch 1,
wobei die Bildanzeigevorrichtung ein ECU (20) hat, das eine Anzeigesteuerungseinheit (25) hat, die eine Verzerrungskorrektur durchführt, um eine Verzerrung aufgrund eines Abbildungsfehlers der Weitwinkellinsen für die Bilder der Links-und-rechts-hinten-Seitenbildschirme (204) zu korrigieren, und
wobei die Anzeigesteuerungseinheit (25) die Links-und-rechts-hinten-Seitenbildschirme (204) derart anzeigt, dass die Ober- und Bodenseiten des Links-hinten-Seitenbildschirms (204) in der linken Richtung nach oben zeigen und die Ober- und Bodenseiten des Rechts-hinten-Seitenbildschirms (204) in der rechten Richtung nach oben zeigen.

4. Bildanzeigevorrichtung nach Anspruch 3 oder einem der anderen vorausgehenden Ansprüche, wobei die Bildanzeigevorrichtung ein ECU (20) hat, das eine Risikoschätzungseinheit (24) und eine Anzeigesteuerungseinheit (25) hat,
wobei die Risikoschätzungseinheit (24) konfiguriert ist, um ein höheres Risiko des Objekts zu schätzen, wenn die Position eines Objekts näher an das Trägerfahrzeug (100) kommt oder wenn die relative Geschwindigkeit des Objekts mit Bezug auf das Trägerfahrzeug (100) größer wird,
wobei die Anzeigesteuerungseinheit (25) konfiguriert ist, um, wenn das durch die Risikoschätzungseinheit (24) geschätzte Risiko höher wird, den Bewegungsobjektannäherungsdetektionsrahmen (210) und den Fußgängerdetektionsrahmen (212) früher anzuzeigen oder um ein Intervall eines Blinkens des Bewegungsobjektannäherungsdetektionsrahmens (210) und des Fußgängerdetektionsrahmens (212) zu reduzieren.

5. Bildanzeigevorrichtung nach Anspruch 4,
wobei die Anzeigesteuerungseinheit (25) konfiguriert ist, um, wenn das durch die Risikoschätzungseinheit (24) geschätzte Risiko höher wird, den Bewegungsobjektannäherungsdetektionsrahmen (210) und den Fußgängerdetektionsrahmen (212) derart anzuzeigen, dass die Helligkeit des Bewegungsobjektannäherungsdetektionsrahmens (210) und des Fußgängerdetektionsrahmens (212) erhöht wird, oder um den Bewegungsobjektannäherungsdetektionsrahmen (210) und den Fußgängerdetektionsrahmen (212) mit geänderter Farbe anzuzeigen.

6. Bildanzeigevorrichtung nach einem der Ansprüche 1, 4 oder 5,
wobei, wenn der Bewegungsobjektannäherungsdetektionsrahmen (210) nicht angezeigt wird, einzig der mittlere Bildschirm (202) angezeigt wird, während der linke Seitenbildschirm (204) und der rechte Seitenbildschirm (204) nicht angezeigt werden.

7. Bildanzeigevorrichtung nach Anspruch 6,
wobei, wenn der Bewegungsobjektannäherungsdetektionsrahmen (210) nicht angezeigt wird, die Bildanzeigeeinheit (30) den Fußgängerdetektionsrahmen (212) anzeigt.

8. Fahrzeug, in dem eine Bildanzeigevorrichtung nach einem der vorausgehenden Ansprüche installiert ist und das ein Getriebe hat,
wobei die Bildanzeigevorrichtung einen Schaltpositionsmesswertgeber (14) hat,
und
wobei die Bildanzeigevorrichtung tätig ist, falls der Schaltpositionsmesswertgeber (14) in einem Betriebszustand ist, während die Schaltposition des Getriebes in einer Zurücksetzposition ist.

## Revendications

1. Dispositif d'affichage d'image comprenant :
un capteur de vitesse de véhicule (12) qui détecte une vitesse d'un véhicule (100),
un capteur d'angle de braquage (13) qui détecte un angle de braquage du véhicule (100), une unité d'acquisition d'image (11) qui acquière une image périphérique du véhicule (100) ;
et
une unité d'affichage d'image (30) qui affiche l'image périphérique acquise par l'unité d'acquisition d'image (11),
dans lequel l'unité d'affichage d'image (30) affiche l'image périphérique sur un écran de gauche (204), un écran central (202), et un écran de droite (204) en séparant l'image périphérique, détecte un piéton (P) reflété sur l'image périphérique par une comparaison de motif en vérifiant les différences entre l'image périphérique et un motif prédéterminé pour l'image périphérique de l'écran central (202), détecte un autre véhicule (V) reflété sur l'image périphérique à l'aide d'un flux optique en analysant la direction et la vitesse d'un point sur l'image périphérique qui se déplace au fil du temps pour l'image périphérique de chacun des écrans de gauche et de droite (204),
dans lequel l'unité d'affichage d'image (30) affiche en outre un cadre de détection de piéton (212) qui entoure le piéton (P) comme une assistance à la conduite qui indique la présence du piéton (P) lorsque le piéton (P) reflété sur l'image périphérique de l'écran central (202) est détecté, et affiche un cadre de détection d'approche d'objet en mouvement (210) qui entoure une partie de l'écran de gauche (204) ou de l'écran de droite (204) du côté où un autre véhicule (V) s'approche de l'endroit auquel l'autre véhicule (V) a été détecté, comme une assistance à la conduite lorsque l'autre véhicule (V) reflété sur l'image périphérique de l'écran de gauche (204) ou de l'écran de droite (204) est détecté,
l'unité d'affichage d'image (30) n'affiche pas le cadre de détection d'approche d'objet en mouvement (210) lorsque la vitesse ou l'angle de braquage du véhicule hôte (100) est égal(e) ou supérieur(e) à une valeur de seuil prédéterminée,
dans lequel l'image périphérique est une image arrière capturée par une caméra arrière à grand angle et l'unité d'affichage d'image (30) affiche l'image arrière sur les écrans arrières de gauche et de droite (204) et sur un écran arrière central (202) en séparant l'image arrière et
dans lequel le dispositif d'affichage d'image possède une unité de contrôle d'affichage (25) qui effectue une correction de distorsion afin de corriger la distorsion des images affichées sur les écrans arrières de gauche et de droite (204),
**caractérisé en ce que**
les écrans arrières de gauche et de droite (204) effectuent un affichage de forme trapézoïdale,
les largeurs des côtés supérieur et inférieur des écrans arrières de gauche et de droite (204) sont réduites sur le côté gauche de l'écran arrière de gauche (204) et sur le côté droit de l'écran arrière de droite (204), et
dans lequel il existe un espace prédéterminé entre chacun des écrans arrières de gauche et de droite (204) et l'écran arrière central (202).

2. Dispositif d'affichage d'image selon la revendication 1,
dans lequel le dispositif d'affichage d'image est configuré de sorte que, lorsque la charge de traitement du dispositif d'affichage d'image est élevée, la taille d'un écran arrière (204') soit réduite selon la correction de distorsion,
dans lequel le dispositif d'affichage d'image peut modifier le cadre de détection d'approche d'objet en mouvement (210) afin d'indiquer à un conducteur qu'un objet en mouvement a été détecté selon la plage de détection d'objet, et
dans lequel le dispositif d'affichage d'image peut afficher le cadre de détection d'approche d'objet en mouvement (210) uniquement sur l'écran arrière (204') lorsque le cadre de détection d'approche d'objet en mouvement (210) se trouve sur l'écran arrière (204').

3. Dispositif d'affichage d'image selon la revendication 1,
dans lequel le dispositif d'affichage d'image possède une ECU (20) qui possède une unité de contrôle d'affichage (25) qui effectue une correction de distorsion afin de corriger la distorsion due à l'aberration des lentilles à grand angle pour les images des écrans arrières de gauche et de droite (204), et
dans lequel l'unité de contrôle d'affichage (25) affiche les écrans arrières de gauche et de droite (204) de sorte que les côtés supérieur et inférieur de l'écran arrière de gauche (204) soient tournés vers le haut dans la direction de gauche et que les côtés supérieur et inférieur de l'écran arrière de droite (204) soient tournés vers le haut dans la direction de droite.

4. Dispositif d'affichage d'image selon la revendication 3 ou l'une quelconque des autres revendications précédentes, dans lequel le dispositif d'affichage d'image possède une ECU (20) qui possède une unité d'estimation de risque (24) et une unité de contrôle d'affichage (25),
dans lequel l'unité d'estimation de risque (24) est configurée pour estimer un risque plus élevé de l'objet lorsque la position d'un objet se rapproche du véhicule hôte (100) ou lorsque la vitesse relative de l'objet par rapport au véhicule hôte (100) devient plus élevée,
dans lequel l'unité de contrôle d'affichage (25) est configurée, lorsque le risque estimé par l'unité d'estimation de risque (24) devient plus élevé, pour afficher le cadre de détection d'approche d'objet en mouvement (210) et le cadre de détection de piéton (212) plus tôt ou pour réduire un intervalle de clignotement du cadre de détection d'approche d'objet en mouvement (210) et du cadre de détection de piéton (212).

5. Dispositif d'affichage d'image selon la revendication 4,
dans lequel l'unité de contrôle d'affichage (25) est configurée, lorsque le risque estimé par l'unité d'estimation de risque (24) devient plus élevé, pour afficher le cadre de détection d'approche d'objet en mouvement (210) et le cadre de détection de piéton (212) de sorte que la luminosité du cadre de détection d'approche d'objet en mouvement (210) et du cadre de détection de piéton (212) soit augmentée, ou pour afficher le cadre de détection d'approche d'objet en mouvement (210) et le cadre de détection de piéton (212) avec une couleur modifiée.

6. Dispositif d'affichage d'image selon l'une quelconque des revendications 1, 4 ou 5,
dans lequel, lorsque le cadre de détection d'approche d'objet en mouvement (210) n'est pas affiché, seul l'écran central (202) est affiché, sans afficher l'écran de gauche (204) et l'écran de droite (204).

7. Dispositif d'affichage d'image selon la revendication 6,
dans lequel, lorsque le cadre de détection d'approche d'objet en mouvement (210) n'est pas affiché, l'unité d'affichage d'image (30) affiche le cadre de détection de piéton (212).

8. Véhicule, dans lequel un dispositif d'affichage d'image selon l'une des revendications précédentes est installé et qui possède une transmission,
dans lequel le dispositif d'affichage d'image possède un capteur de position de vitesse (14), et
dans lequel le dispositif d'affichage d'image fonctionne si le capteur de position de vitesse (14) se trouve dans un état de fonctionnement pendant que la position de vitesse de la transmission se trouve dans une position inverse.
